Europäisches Patentamt

European Patent Office

Office européen des brevets

(19)

(11) **EP 1 188 149 B1**

(12) **FASCICULE DE BREVET EUROPEEN**

(45) Date de publication et mention
de la délivrance du brevet:
**25.02.2004   Bulletin 2004/09**

(21) Numéro de dépôt: **00931339.6**

(22) Date de dépôt: **22.05.2000**

(51) Int Cl.⁷: **G06T 17/30**

(86) Numéro de dépôt international:
**PCT/FR2000/001403**

(87) Numéro de publication internationale:
**WO 2000/072272 (30.11.2000 Gazette 2000/48)**

(54) **PROCEDE DE CONSTRUCTION EN TROIS DIMENSIONS D'UN ORGANE VIRTUEL REPRESENTATIF D'UN ORGANE REEL**

DREI-DIMENSIONALES KONSTRUKTIONSVERFAHREN EINES VIRTUELLEN ORGANES DAS EIN ECHTES ORGAN DARSTELLT

METHOD FOR THREE-DIMENSIONAL CONSTRUCTION OF A VIRTUAL ORGAN REPRESENTING A REAL ORGAN

(84) Etats contractants désignés:
**AT BE CH CY DE DK ES FI FR GB GR IE IT LI LU MC NL PT SE**

(30) Priorité:  **20.05.1999  FR 9906667**

(43) Date de publication de la demande:
**20.03.2002   Bulletin 2002/12**

(73) Titulaire: **UNIVERSITE DE RENNES I**
**F-35000 Rennes (FR)**

(72) Inventeur: **SIREGAR, Pridi**
**F-35760 Montgermont (FR)**

(74) Mandataire: **Vidon, Patrice**
**Cabinet Vidon**
**16 B, rue Jouanet - B.P. 90333**
**35703 Rennes Cedex 7 (FR)**

(56) Documents cités:
- **HABER R B ET AL: "A DATA MODEL FOR SCIENTIFIC VISUALIZATION WITH PROVISIONS FOR REGULAR AND IRREGULAR GRIDS" PROCEEDINGS OF THE ANNUAL CONFERENCE ON VISUALIZATION,US,LOS ALAMITOS, IEEE. COMP. SOC. PRESS, vol. CONF. 2, 22 - 25 octobre 1991, page 298-305 XP000286793**
- **BERENFELD AND ABBOUD: "SIMULATION OF CARDIAC ACTIVITY AND THE ECG USING A HEART MODEL WITH A REACTION-DIFFUSION ACTION POTENTIAL" MEDICAL ENGINEERING & PHYSICS, vol. 18, no. 8, décembre 1996 (1996-12), pages 615-615-625, XP000866238 UK**
- **LEON L.J.: 'Extracellular simulation of a model bundle of cardiac tissues' PROC. OF IEEE 21ST ANNUAL NORTHEAST BIOENGINEERING CONF. 22 Mai 1995 - 23 Mai 1995, MONTREAL (CA), pages 15 - 16**

EP 1 188 149 B1

**Description**

**1. domaine de l'invention**

1.1 domaine général

Le domaine de l'invention est celui de la modélisation d'un organe, tel que, par exemple, un coeur ou un cerveau. En d'autres termes, l'invention concerne la construction d'un organe virtuel, représentatif d'un organe réel.

Plus particulièrement, l'invention concerne un procédé de construction d'un organe virtuel en trois dimensions, paramétrable en fonction de chaque patient considéré et/ou de chaque application.

1.2 exemples d'applications

Les applications d'un tel procédé sont en effet très nombreuses, et peuvent reposer tant sur des analyses quantitatives que qualitatives. A titre d'exemples, non limitatifs, on peut citer la simulation de processus physiologiques, l'enseignement et la formation assistée par ordinateur, l'aide au diagnostic, les tests pharmacologiques et/ou cliniques,... Généralement, la technique de l'invention permet de développer d'une part des aspects explicatifs, et d'autre part des aspects prédictifs.

1.3 organes concernés

L'invention peut être mise en oeuvre pour la plupart des organes, qu'il s'agisse d'organes humains ou d'animaux. Il peut par exemple s'agir du coeur, du cerveau, de muscles, de vaisseaux,...

Un organe est généralement composé de plusieurs tissus présentant des propriétés structurelles et/ou physiologiques différentes, dues à l'orientation et/ou au type des cellules dont ils sont constitués.

Ces tissus peuvent être organisés en différentes couches (comme les trois couches tissulaires constitutives du coeur : endocarde, myocarde et péricarde), ou en réseaux (comme le tissu nodal).

Un tissu peut être structuré notamment en fibres, comme le tissu musculaire.

Lorsqu'il est modélisé en trois dimensions, un organe virtuel est constitué d'un ensemble d'éléments unitaires ou voxels (par exemple : 1 mm$^3$). Chacun de ces voxels doit posséder des caractéristiques géométriques et/ou physiologiques propres. Le modèle une fois constitué peut fonctionner en automate cellulaire. L'invention concerne plus particulièrement la construction de ce modèle.

1.4 exemple : le coeur

Sans que cela soit limitatif de la portée de la demande de protection, on décrit plus précisément par la suite, le cas de la modélisation du coeur, et plus précisément encore de la modélisation de l'activité électrique cardiaque.

Pour obtenir une modélisation d'activité électrique cardiaque précise et efficace, il est nécessaire de prendre en compte les niveaux cellulaires, tissulaires, organes et systèmes. Il n'existe pas, actuellement, de technique de modélisation prenant en compte l'ensemble de ces différents aspects, pour l'intégralité du coeur.

**2. état de l'art**

2.1 niveau cellulaire

On connaît des modèles du niveau cellulaire, basés notamment sur les travaux théoriques de Hodgkin & Huxley (Hodgkin 52), Di Francesco & Noble (Di Francesco 85) ou Beeler & Reuter (Beller 77) (afin de simplifier la lecture, les différentes références citées, ainsi que d'autres concernant le domaine de l'invention, ont été regroupées en annexe).

Ces modèles particuliers peuvent apporter un éclairage fin sur l'action d'agents médicamenteux au niveau de la membrane des cellules cardiaques. Ils ne permettent pas, en revanche, d'étudier les phénomènes électriques.

2.2 niveau tissulaire

Afin d'analyser les phénomènes électriques qui sont notamment à l'origine des troubles du rythme cardiaque, il faut en effet aborder le niveau tissulaire. La propagation des ondes de dépolarisation au sein du myocarde peut être simulée, en calculant le potentiel d'action de cellules individuelles organisées en un réseau.

Les interactions intercellulaires peuvent ainsi être étudiées, et corrélativement les mécanismes de base à l'origine d'un grand nombre de troubles du rythme.

Différents modèles tissulaires sont connus, allant des systèmes d'équations de type Beeler & Reuter simplifiés (Van Cappelle 80) aux automates cellulaires (Markus 90). Un autre exemple est proposé par Leon L. J, dans le document "Extracellular stimulation of a model bundle of cardiac tissues" (proceedings of the 1995 IEEE 21st annual northeast bioengineering conference, Montreal (CA), 22 mai 1995 - 25 mai 1995, pp. 15-16)

2.3 modélisation 3D

A une échelle supérieure, la modélisation en trois dimensions (3D) du coeur est nécessaire pour comprendre dans toutes leurs complexités les pathologies cardiaques. On connaît ainsi différents modèles d'éléments spécifiques du coeur. Notamment, des modèles du ventricule gauche (Léon 91) et des deux ventricules (Takhor 89, Wei 95, Noble 98) ont été réalisés dans cet objectif.

2.4 analyse de l'ECG

En outre, pour analyser la génération de l'ECG. l'étude de la propagation des champs électrique et magnétique à travers les volumes conducteurs est nécessaire. Ces aspects ont notamment été étudiés par Gezelowitz (Gezelowitz 89) et Cuffin (Cuffin 77).

**3. inconvénients de l'état de l'art**

3.1 limitation à un aspect particulier et complexité

Les différents travaux précités ne permettent donc, au mieux, que l'étude d'un aspect particulier (niveau cellulaire ou niveau tissulaire par exemple) et/ou que d'une petite partie du coeur.

Cependant, il nécessite la mise en oeuvre de moyens de traitement très puissants. et donc très onéreux, typiquement du type des ordinateurs Cray (marque déposée).

3.2 construction manuelle

Par ailleurs, la construction de ces modèles connus est essentiellement manuelle (non automatique). En d'autres termes, la mise en oeuvre de ces modèles suppose le paramétrage spécifique d'éléments unitaires constitutifs du modèle. Cela est clairement un traitement long, fastidieux et complexe.

De plus, on obtient ainsi un modèle unique, qu'il est impossible, ou à tout le moins très peu aisé, d'adapter à des caractéristiques propres à un patient donné, et/ou à un problème donné.

3.3 conclusion

En conséquence, ces techniques sont essentiellement réservées à la recherche de haut niveau, dans des domaines très précis.

Des situations et des problèmes similaires sont rencontrés dans la modélisation d'autres types d'organes.

C'est par exemple le cas des vaisseaux sanguins. Ces derniers sont astreints à des structures anatomiques, par exemple à la surface du coeur, pour les vaisseaux coronaires.

**4. objectifs de l'invention**

L'invention a notamment pour objectif de pallier ces différents inconvénients de l'état de l'art.

4.1 approche globale d'un organe

Plus précisément, un objectif de l'invention est de fournir une technique de construction d'un organe virtuel complet (et non limité à une portion d'organe spécifique). Par exemple, dans le cas de la modélisation du coeur, la technique de l'invention doit permettre d'inclure au sein d'un même modèle les oreillettes, les ventricules, et le système de conduction électrique spécialisé du coeur.

Un autre objectif de l'invention est de fournir une telle technique, permettant de prendre en compte simultanément plusieurs aspects de l'organe étudié. Ainsi, dans le cas du coeur, la technique de l'invention permet de prendre en compte les niveaux cellulaires, tissulaire, organe et système (formé par exemple de l'organe et des vaisseaux)

Il convient de noter que la simple formulation de ces objectifs n'est pas évidente pour l'homme du métier. En effet, comme le montre l'art antérieur discuté en préambule, traiter chaque aspect indépendamment apparaissait déjà comme une opération très complexe.

Un autre objectif de l'invention est de fournir une telle technique de construction d'un organe virtuel, qui puisse être mise en oeuvre dans de très nombreuses applications, de l'enseignement assisté par ordinateur aux tests pharmacologiques et/ou cliniques.

Plus généralement, un objectif de l'invention est de fournir une telle technique adaptée à fournir des modèles en tant qu'outil explicatif et prédictif, liée à différents patients ou différentes situations, et permettant d'effectuer des études qualitatives et/ou quantitatives.

4.2 paramétrisation et adaptabilité

Un autre objectif important de l'invention est de fournir une telle technique qui soit aisément et efficacement adaptable à une situation et/ou un patient donné.

En d'autres termes, l'invention doit offrir une très forte adaptabilité, permettant par exemple la prise en compte d'un défaut particulier, alors que les techniques connues ne permettent que de construire un modèle global.

4.3 simplicité et coût réduit

Encore un autre objectif de l'invention est de fournir une telle technique, qui soit aisée à utiliser et à mettre en oeuvre, sans nécessiter la présence d'un spécialiste du domaine.

L'invention a également pour objectif de fournir une telle technique qui ne nécessite pas des moyens de traitement très complexes et très coûteux. En particulier, un objectif de l'invention est de fournir un procédé de construction d'un organe virtuel, tel que le coeur, pouvant être mis en oeuvre sur un micro-ordinateur de type PC (marque déposée).

**5. présentation de l'invention**

5.1 technique de construction d'un organe

Ces objectifs, ainsi que d'autres qui apparaîtront par la suite sont atteints selon l'invention à l'aide d'un procédé de construction en trois dimensions d'un organe virtuel, représentatif d'un organe réel, comprenant notamment les étapes suivantes :

- obtention d'un modèle surfacique dudit organe virtuel, comprenant au moins une surface paramétrique (S) représentant une couche tissulaire dudit organe virtuel ;
- affectation à chacune desdits surfaces paramétriques d'au moins une courbe, représentant l'axe central d'une fibre de ladite couche tissulaire, ladite affectation étant effectuée en fonction de propriétés structurelles dudit organe :

- création du volume dudit organe virtuel, sous la forme d'éléments unitaires, ou cellules, dont les propriétés sont affectées en fonction de règles physiologiques et/ou mécaniques associées audit organe, et construits successivement en parcourant lesdites courbes.
- création du volume dudit organe virtuel, sous la forme d'éléments unitaires, ou cellules, construits successivement en parcourant lesdites courbes ;
- affectation, à au moins certaines desdites cellules, d'au moins une propriété physique et/ou physiologique.

Ainsi, l'invention repose sur une approche tout à fait nouvelle et inventive de la construction d'un modèle d'organe virtuel qui s'effectue automatiquement et rapidement, et de façon paramétrable en fonction de chaque patient, à partir d'un modèle générique.

Plus précisément, à partir d'un modèle surfacique paramétrique, ou enveloppe, on génère automatiquement un modèle volumique, qui permet de faire par exemple de la simulation de l'activité électrique.

Le modèle surfacique se présente sous la forme d'un ensemble d'axes centraux de fibres qui sont ensuite parcourus progressivement, pour remplir le volume, de façon à construire le modèle volumique. Le parcours de ces axes centraux tient compte des spécificités des fibres correspondantes. Chaque élément de volume (voxel) créé lors du parcours possède différents attributs qui lui sont propres.

De façon simplifiée, le principe général de l'invention consiste donc à construire tout d'abord un modèle en "fil de fer" de l'organe, puis à plaquer sur celui-ci les fibres le constituant, selon les règles physiologiques correspondantes puis à créer le volume, en parcourant les fibres, chaque élément à créer possédant ses caractéristiques géométriques, anatomiques et physiologiques (par exemple électro-physiologiques).

Le modèle 3D ainsi obtenu peut ensuite fonctionner en automate cellulaire, des propriétés physiques et/ou physiologiques étant affectées aux cellules. Ainsi, avantageusement, ladite étape d'affectation d'au moins une propriété physique et/ou physiologique permet de déterminer un comportement dynamique intrinsèque desdites cellules et/ou la dynamique des interactions avec des automates cellulaires et/ou toute(s) équation(s) d'évaluation ainsi construits.

5.2 aspects préférentiels de l'invention

De façon avantageuse, ladite étape de création du volume affecte à chacune desdites cellules, selon l'invention, un volume et une orientation.

Selon un mode de réalisation préférentiel de l'invention, ladite étape de création du volume met en oeuvre un balayage de chacun des points de la courbe considérée par une quadrique.

Dans ce cas, les axes de ladite quadrique sont avantageusement colinéaires aux vecteurs unités du cadre de Frenet associé à chacun desdits points.

Comme cela apparaîtra plus clairement par la suite, cette approche permet de construire un organe virtuel de bonnes qualité et précision, de façon efficace et rapide.

Selon un autre aspect de l'invention, le procédé comprend de plus une étape d'affectation, à au moins certaines desdites cellules, d'au moins une propriété dynamique.

Lesdites propriétés dynamiques peuvent notamment appartenir au groupe comprenant :

- des propriétés électriques (par exemple les phases du cycle cardiaque pour les cellules du tissu musculaire ou du tissu nodal) ;
- des propriétés mécaniques (par exemple l'élastance des fibres musculaires du myocarde ou de la paroi moyenne des vaisseaux sanguins) ;
- des propriétés chimiques (par exemple la sensibilité des cellules des glandes surrénales produisant de l'adrénaline aux signaux (médiateur) du système nerveux sympathique (liée à la concentration de récepteurs spécifiques des médiateurs à la surface des cellules productrices). Une variation de cette concentration implique selon le cas (augmentation ou diminution) un déplacement dans un sens ou dans l'autre de l'équilibre chimique suivant :

    Récepteur + médiateur = récepteur - médiateur ;

- des propriétés adaptatives (par exemple l'adaptation des cellules du myocarde et du tissu nodal à la longueur du cycle cardiaque) ;
- des propriétés évolutives (par exemple l'augmentation de la probabilité de division cellulaire des cellules du myocarde en fonction d'un accroissement de la postcharge (par exemple lors d'une sténose aortique) et de la position des cellules dans le myocarde. Le modèle peut ainsi évoluer de lui-même d'un coeur anatomiquement normal vers un coeur hypertrophié, sous réserve qu'il soit couplé avec un modèle hémodynamique décrivant les pressions intraventriculaires).

De façon préférentielle, on affecte également à au moins certaines desdites cellules des règles de propagation de signaux vers au moins une autre cellule, qui peut être voisine ou distante.

Selon un mode de réalisation avantageux de l'invention. ladite étape d'affectation de courbes comprend les étapes suivantes :

- réalisation desdites courbes dans un plan (uv) ;
- application à partir dudit plan (uv) desdites courbes sur ladite surface (S).

De façon préférentielle, au moins certains des paramètres appartenant au groupe comprenant :

- la résolution spatiale ;
- le nombre de couches ;
- le nombre de fibres par couche ;
- le rayon de la quadrique ;
- les propriétés de propagation,

sont paramétrables.

Avantageusement, le procédé de l'invention comprend alors une étape de contrôle desdits réglages, en fonction de contraintes prédéterminées (contrôle de cohérence, réalisation d'un modèle "sans trou"...).

Selon encore un autre aspect de l'invention, le procédé peut également comprendre une étape de mise en place dudit organe virtuel dans un modèle d'une portion du corps recevant ledit organe virtuel.

Ladite étape de mise en place peut notamment tenir compte d'au moins un des aspects suivants :

- position dans le modèle de ladite portion du corps dudit organe virtuel ;
- inclinaison dudit organe virtuel par rapport au modèle de ladite portion du corps ;
- paramétrage du modèle de ladite portion du corps.

L'invention peut s'appliquer à de nombreux organes (humains ou animaux). Ainsi, ledit organe peut notamment appartenir au groupe comprenant :

- le coeur ;
- le cerveau ;
- les muscles, notamment les muscles lisses et les muscles squelettiques ;
- les vaisseaux.

Ledit organe virtuel peut avantageusement être utilisé pour au moins une des opérations suivantes :

- enseignement ou formation assistée par ordinateur ;
- aide au diagnostic ;
- recherche fondamentale, clinique et/ou pharmacologique ;
- aide à la surveillance et au contrôle fonctionnel d'un organe réel.

Ledit organe virtuel peut être utilisé selon plusieurs approches, et notamment pour :

- prédire une situation future, en fonction de conditions initiales (simulation) ; et/ou ;
- expliquer une situation donnée à partir d'observations, de mesures externes et d'une base de connaissance.

Dans le cas particulier du coeur, ledit organe peut avantageusement tenir compte de deux types de tissus :

- le tissu musculaire ;
- le tissu constituant le réseau électrique du coeur.

Par ailleurs, toujours dans le cas du coeur. le modèle de simulation électrique obtenu peut être couplé avec un modèle hémodynamique.

## 6. description d'un mode de réalisation préférentiel

### 6.1 liste des figures

D'autres caractéristiques et avantages de l'invention apparaîtront plus clairement à la lecture de la description suivante d'un mode de réalisation préférentiel de l'invention, donné à titre de simple exemple illustratif et non limitatif et des dessins annexés, parmi lesquels :

- la figure 1 est un organigramme simplifié du principe général de construction d'un organe virtuel selon l'invention ;
- la figure 2 illustre un cadre de Frenet, tel que mis en oeuvre dans le cadre de l'invention ;
- la figure 3 est un organigramme précisant certains aspects de l'organigramme de la figure 1, dans le cas particulier de la modélisation du coeur ;
- la figure 4 est une copie d'écran illustrant l'estimation de la surface des cavités ventriculaires dans l'étape d'obtention des modèles surfaciques du procédé de la figure 3 ;
- la figure 5 est une copie d'écran illustrant la phase de paramétrage (nombre de couches et nombre de fibres) dans le procédé de la figure 3 ;
- la figure 6 est une copie d'écran illustrant la définition structurelle des fibres centrales, dans le procédé de la figure 3 ;
- la figure 7 illustre l'utilisation du cadre de Frenet pour l'étape de remplissage de volume du procédé de la figure 3 ;
- les figures 8a et 8b sont deux vues d'un modèle paramétriques du coeur ;

- les figures 9a à 9c illustrent le processus de balayage de courbes selon l'invention, respectivement dans les cas d'un coeur normal, d'un coeur avec une hypertrophie ventriculaire gauche et d'un coeur dilaté ;
- les figures 10a à 10d illustrent le rendu en volume d'un modèle 3D obtenu selon le procédé de l'invention ;
- la figure 11 est une représentation en fil de fer du système de conduction spécialisé du coeur des figures 10a à 10d;
- la figure 12 est une représentation en fil de fer montrant la base des trois principaux vaisseaux du coeur des figures 10a à 10d ;
- les figures 13a à 13b illustrent l'effet de la paramétrisation pour représenter un coeur normal (figure 13a) ou un coeur dilaté (figure 13b) ;
- les figures 14a à 14c et 15a à 15c illustrent une comparaison entre un coeur normal (figures 14a à 14c) et un coeur hypertrophié (figures 15a à 15c);
- la figure 16 montre une simulation d'un électrocardiogramme (électrodes précordiales) et d'un vectocardiogramme (dans 3 plans orthogonaux).

## 6.2 Principe général de l'invention

### 6.2.1 principe de la construction

Comme indiqué précédemment, l'invention concerne une technique avantageuse de construction d'un organe virtuel. Selon cette technique, on génère un modèle volumique, à partir d'une enveloppe, ou modèle surfacique paramétrique.

Sur ce modèle surfacique, on définit la forme, la nature et l'orientation des fibres. Ces dernières sont ensuite parcourues, de façon à créer des éléments unitaires (voxel) destinés à "remplir" le volume, et donc construire le modèle volumique. Le parcours suit les orientations de chaque fibre, et tient compte du type de ces fibres. A chaque élément unitaire on affecte un ensemble d'informations, (par exemple attributs électriques, physiologiques,...).

La technique de l'invention permet de modifier de nombreux paramètres de la construction. On peut également adapter, manuellement et/ou automatiquement, la taille, les proportions et l'orientation de l'organe. Par exemple, il est possible de tenir compte de la dilatation du coeur, en agissant sur la taille de la surface paramétrique.

L'environnement de l'organe (le buste, par exemple, dans le cas du coeur) peut également être ajusté de la même façon.

Après la construction géométrique, on passe à l'aspect électrophysiologique. On affecte donc à chaque voxel ses propres lois, et les règles de propagation correspondantes.

### 6.2.2 exemples d'utilisations

Il est ainsi possible, dans le cas du coeur, de générer un ECG. Il est notamment possible d'obtenir les 12 dérivations classiquement considérées par l'homme de l'art.

L'invention permet également de raisonner de façon à résoudre le "problème inverse", à partir d'une base de données et d'une analyse des signaux. Par exemple, à partir d'informations mesurées correspondant aux 12 dérivations, il est possible d'estimer l'activité électrique de l'organe.

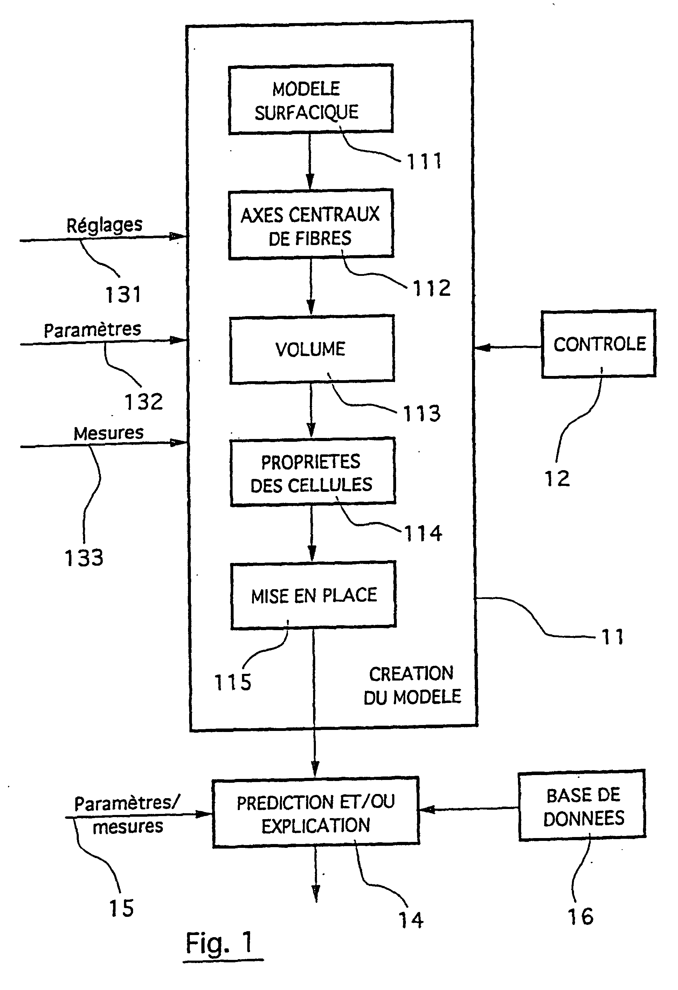

### 6.2.3 algorithme simplifié (figure 1)

Un organe est généralement composé de plusieurs tissus présentant des propriétés structurelles et/ou physiologiques différentes, dues à l'orientation et/ou au type des cellules dont ils sont constitués.

Ces tissus peuvent être organisés en différentes couches (comme les trois couches tissulaires constitutives du coeur : endocarde, myocarde et péricarde). ou en réseaux (comme le tissu nodal).

Un tissu peut être structuré notamment en fibres, comme le tissu musculaire.

La figure 1 illustre, de façon simplifiée, le fonctionnement_général de la technique de l'invention, lorsque les tissus sont structurés en couches tissulaires.

La création 11 du modèle, ou organe virtuel, comprend donc, tout d'abord une étape de création d'un modèle surfacique 111 (S), pour chaque couche de l'organe. Ce modèle surfacique peut être comparé à une représentation en "fil de fer".

Ensuite, on applique sur la surface (S) les axes centraux des fibres (112) de l'organe, qui sont définis comme des courbes.

On effectue alors un balayage (113) des courbes, en chaque point des axes des fibres par une quadrique générale, dont les axes sont colinéaires avec les vecteurs unité du cadre de Frenet.

Le balayage des courbes réalise deux opérations simultanément :

- il agit comme un "tailleur" d'un bloc de cellules tridimensionnel afin de produire un modèle de la masse de l'organe;
- il associe à chaque cellule des propriétés structurelles propres, à savoir l'orientation de la fibre à laquelle elle appartient.

Ensuite, on affecte (114) à chacun des blocs de cellules ses différentes propriétés électriques, physiologiques,...

Enfin, on définit (115) l'orientation et la position de l'organe dans son environnement.

Ces différentes opérations peuvent notamment tenir compte de résultats de mesure 133, de réglages 131 et/ou de paramètres 132 adaptés.

Par exemple, la résolution spatiale, le nombre de couches, le nombre de fibres pour chaque couche et le rayon de la quadrique peuvent être définis de manière interactive, permettant ainsi de construire automatiquement des modèles automates cellulaires (AC) anisotrope en trois dimensions avec des tailles, des formes et des résolutions spécifiées.

Un contrôle (12) peut vérifier la pertinence des différents réglages, et guider si nécessaire l'utilisateur. Il peut notamment comprendre un assistant de modélisation, qui accède à une base de connaissances, de façon à contrôler un certain nombre de contraintes, telles que l'adéquation entre une résolution spatiale sélectionnée et le nombre de couches ainsi que le nombre de fibres pour chaque couche qui sont nécessaires pour produire un modèle "sans trou".

A partir du modèle obtenu, on peut mettre en oeuvre de nombreuses applications 14, reposant sur une prédiction et/ou une explication. Ces applications peuvent tenir compte de mesures et/ou de paramètres 15, et s'appuyer sur une base de données adaptée 16.

*6.2.4 généralisations*

Lorsque des tissus ont la structure de fibres ou de réseaux, la masse de chaque fibre est également le résultat d'un balayage de courbe, appliqué à l'axe de la fibre.

Les propriétés structurelles ne sont pas les seules qui peuvent être attribuées aux cellules ainsi générées. Notamment, lorsque des propriétés dynamiques, telles que des propriétés électriques sont affectées aux cellules, le modèle AC 3D peut alors être utilisé comme modèle de propagation d'activité électrique (par exemple l'activité électrique cardiaque).

*6.2.5 approche "intuitive"*

Chaque couche de tissu est donc définie comme une surface paramétrique S, et l'axe central de chaque fibre est défini comme une courbe sur cette surface. Les courbes sont d'abord établies dans un plan (uv) et sont ensuite appliquées à partir de ce plan (uv) sur la surface S.

On obtient ainsi les applications suivantes :

$$(u,v) \xrightarrow{\quad Q \quad} (u',v')$$

$$(u',v') \xrightarrow{\quad s \quad} (x,y,z)$$

où :

$$Q(u) = \begin{bmatrix} u'(u,v) \\ v'(u,v) \end{bmatrix}$$

$$S(u',v') = \begin{bmatrix} x(u',v') \\ y(u',v') \\ z(u',v') \end{bmatrix}$$

De manière intuitive (et informelle), le principe général est le suivant : un "donut"(beignet anglo-saxon) dessiné sur une feuille de papier à plat ressemblera toujours à un beignet s'il est appliqué sur une sphère par une fonction continue.

*6.2.6 approche mathématique*

Supposons que Q (u) définit une courbe sigmoïde U dans le plan (UV). Si S(U,V) définit une surface S continue et régulière, c'est-à-dire ayant des dérivés continus, alors l'application de Q (S) donnera un type de courbe sigmoïde sur S.

Q(u) et une courbe spline B ou une courbe de Bézier et S(U,V) est soit une quadrique généralisée définie sous forme paramétrique, soit un patch spline ou un patch de Bézier.

Considérons le cas où S est un "patch" de Bézier. Dans ce cas, une forme générale de l'application est donnée par :

$$Q(u) = \sum_{i=0}^{m} P_i B_{s_i}(U) = \begin{bmatrix} u' \\ v' \end{bmatrix}$$

$$Q'(u',v') = \sum_{i=0}^{3} \sum_{j=0}^{3} P_{ij} B_i(u') B_j(v')$$

dans lesquelles Bsi et Bi sont respectivement des fonctions de base spline et Bézier.

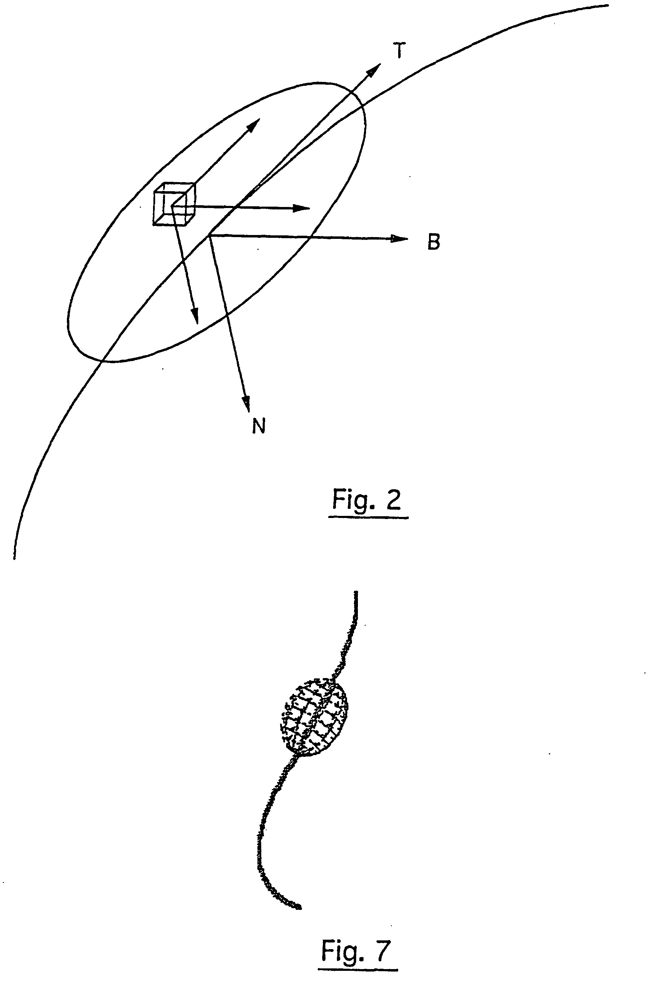

A chaque échantillon d'une courbe Q', le cadre de Frenet correspondant est calculé. Ce cadre est illustré en figure 2. Il correspond à un système de coordonnées de référence locale qui fournit les informations nécessaires pour construire le modèle AC 3D. Il est défini par le point origine, ou échantillon, P et trois vecteurs unités T, N et B, où :

- T est le vecteur unité de longueur tangent à la courbe en P ;
- N est un vecteur unité appelé normal principal, perpendiculaire à la courbe en P ;
- B est le produit vectoriel de T et de N.

Le cadre de Frenet s'avère donc intéressant pour la modélisation, étant donné que T indique l'orientation de la fibre en chaque point, et N et B définissent un plan orthogonal à T. Ils indiquent donc la direction radiale par rapport aux centres des fibres.

A partir de ces informations, on peut construire des modèles AC 3D en effectuant un balayage de courbes pour chaque point des axes des fibres par une quadrique générale dont les axes sont co-linéaires aux vecteurs unité du cadre de Frenet.

Etant donné que la surface de la quadrique correspond à une isodistance au sens métrique euclidien généralisé, on peut sélectionner n'importe quelle cellule à l'intérieur de la surface comme faisant partie de la masse de l'organe, et la caractériser en terme d'orientation de ces fibres.

*6.2.7 Extension.*

Le procédé de modélisation faisant intervenir la quadrique peut également être appliquée durant la phase de modélisation par la méthode des éléments finis ou celle des différences finies. Cette approche est notamment applicable lorsque le milieu modélisé exhibe au moins dans certaines régions des symétries axiales ou quasi-axiales.

Ainsi, le procédé de construction et de modélisation, applicable dans la réalisation de l'AC 3D, peut l'être aussi lorsque le problème est posé en termes de différences finies ou d'éléments finis. En effet, dans les trois cas (AC 3D, différences finies, éléments finis) l'espace d'intérêt est discrétisé en sous-régions ou éléments. A l'intérieur de cet espace, les propriétés physiques d'un certains nombre d'éléments doivent être définies.

Intuitivement parlant, le procédé peut s'intégrer dans la phase de modélisation de la méthode des différences finies ou celle des éléments finis. Le procédé intéresse la modélisation géométrique ainsi que la modélisation des propriétés physiques.

Par exemple, l'équation de Poisson s'écrit :

$$\nabla . c \nabla u = f$$

où *u et f* sont des fonctions scalaires et c un tenseur pouvant varier en chaque point de l'espace considéré. L'ensemble du problème est rapporté à un repère W.

Cette équation décrit entre autres

- la distribution de potentiel u à l'intérieur et à la surface d'un conducteur électrique en réponse à une distribution de courant sources *f* (exemple : l'ECG (*u*) traduisant l'activité électrique cardiaque (*f*)),
- la déformation µ d'un milieu élastique soumis à une tension *f,*
- l'écoulement $\nabla u$ irrotationnel (laminaire) d'un fluide incompressible dérivant d'un champ de pression *u* ; ce fluide étant alimenté (ou diminué) par des sources et des puits *f*.

Dans le premier cas, le tenseur c décrit le conductivité électrique locale selon les trois axes de W, dans le deuxième cas l'élastance. et dans le troisième c est un scalaire correspondant à la densité de masse.

La forme discrète (différences finies, éléments finis) de l'équation de Poisson peut s'écrire comme suit :

$$A^T CA u = f$$

La matrice A contient toutes les informations relatives aux données géométriques du problème posé (on notera que les données de A ne sont pas réduites à la seule description voxel de l'objet étudié). La matrice C décrit les propriétés physiques (conductivité, élastance,...). Les colonnes de ces matrices sont rapportées au repère *W*.

Le procédé de construction faisant intervenir la quadrique peut être avantageusement utilisé lorsque le problème (géométrique et physique) possède dans au moins une région de l'espace une symétrie, par exemple axiale ou quasi axiale, locale à chaque 'point' de cette région. Dans ce cas, il est plus aisé de décrire les propriétés physiques en chaque point de cet espace dans le repère de Frenet (T,N,B)) que dans le repère *W*. En effet. le tenseur local rapporté au cadre de Frenet est diagonal :

$$\mathbf{C_{loc}} = \begin{pmatrix} c_T & 0 & 0 \\ 0 & c_N & 0 \\ 0 & 0 & c_B \end{pmatrix}$$

La matrice locale $C_{loc}$ rapportée à *W* est en général non diagonale et peut être calculée comme suit :

$$C_{loc,W} = R^T C_{Loc} R$$

où **R** est une matrice de rotation contenant les cosinus directeurs des axes T,N,B rapportés aux axes de *W* .

Enfin, la matrice C peut être construite à partir des données locales $C_{loc,W}$, directement dans le cas des différences finies, et indirectement dans le cas des éléments finis, en passant par les fonctions tests et en appliquant des méthodes issues des formulations Galerkin ou de Rayleigh-Ritz.

Ainsi, le procédé de l'invention peut s'intégrer dans la phase de modélisation de la méthode des différences finies ou celle des éléments finis de la façon suivante:

- participer à la modélisation géométrique (construction de la matrice A) grâce à la construction géométrique de l'organe ;

- établir la matrice C.

### 6.3 exemple : le coeur

On décrit maintenant plus en détail le cas particulier de la modélisation du coeur.

*6.3.1 applications*

Le mode de réalisation décrit ci-après est notamment destiné au développement de systèmes d'enseignement assistés par ordinateur (EAO) et d'aide au diagnostic assisté par ordinateur dans le domaine de la cardiologie. Il propose donc les structures complètes, qui incorporent différents types de modèles de calcul de l'activité électrique du coeur.

Un de ces objectifs est de fournir aux utilisateurs un environnement capable de prédire et d'expliquer les troubles du rythme cardiaque.

Par prédiction, on entend par exemple le calcul de l'activité électrique du coeur lorsque des valeurs de paramètres physiologiques modélisés sont données comme conditions initiales. Par explication, on entend l'action de déduire les causes possibles à partir de certaines données observées.

On comprend que, par ces deux aspects, le champ d'application du système de génération d'un modèle AC 3D du coeur selon l'invention couvre en particulier la recherche fondamentale, clinique et pharmacologique et, au delà, la conception de systèmes de monitorage intelligents.

*6.3.2 simulation de l'activité électrique cardiaque*

Un modèle AC 3D du coeur est donc intégré dans la structure. Il a pour rôle, en particulier, de permettre l'étude des états physio-pathoiogiques en utilisant différentes représentations des troubles électrophysiologiques et de la morphologie des ondes P, QRS et T battement par battement dans l'ECG.

Les paramètres de modélisation comprennent la taille de grain, l'orientation des fibres, l'épaisseur de paroi libre et de septum. Chaque modèle est un modèle de conduction et de propagation, dans lequel sont représentées les oreillettes, les ventricules et le système de conduction spécialisé.

Il est ainsi possible de simuler des troubles du rythme cardiaque dans lesquels les oreillettes, les ventricules et les voies accessoires, ainsi que le système de His-Purkinje, peuvent jouer un rôle, seuls ou associés, dans le déclenchement et le maintien d'une arythmie.

Le modèle de l'invention inclut la spécification du potentiel d'action de chaque cellule prise individuellement, la stimulation atriale et/ou ventriculaire prématurée, l'anisotropie due à l'orientation des fibres, la variation régionale de la vitesse de conduction et des durées réfractaires, et ce dans le domaine des dispersions statistiques des paramètres électro-physiologiques.

L'adaptation des cellules à la longueur du cycle et la stimulation prématurée permettent au modèle de reproduire des processus tels que la conduction cachée et/ou les phénomènes de Wenckebach.

*6.3.3 simulation de l'activité électrique cardiaque*

Expliquer un ECG nécessite une qualification et des capacités de raisonnement. Ceci suppose de pouvoir déduire des descriptions explicites des processus simulés à partir des représentations appropriées et des moteurs de déduction correspondants. Les fonctions et les composantes cardiaques peuvent être explicitées dans le modèle qualitatif du système, afin de fournir une aide à l'analyse.

Par ailleurs, l'interprétation qualitative des troubles du rythme cardiaque peut nécessiter des modèles numériques détaillés. Par exemple, une ré-entrée dans le tissu ischémique ou une fibrillation ventriculaire induite par une extrasystole ventriculaire (PVB = « Premature Ventricular Beat » = extrasystole ventriculaire) ne peuvent être reproduites que par un modèle possédant un grand nombre d'éléments individuels. A cet effet, le système comprend des modèles automates cellulaires 2D et 3D composés de milliers d'éléments.

*6.3.4 définition de la morphologie et de la structure du modèle de coeur*

L'approche de modélisation de l'invention est centrée sur les contraintes suivantes :

- l'orientation des fibres doit vérifier la rotation en sens inverse des aiguilles d'une montre observée dans les travaux expérimentaux et elle doit respecter au sens mathématique, la continuité d'une surface régulière ;
- une fois définis les paramètres géométriques d'un coeur réel, un modèle doit être créé automatiquement.

Pour satisfaire ces deux contraintes, la génération d'un modèle selon l'invention se fait en deux étapes principales :

- définition des paramètres du modèle, en estimant notamment les caractéristiques de base telles que la taille du coeur, l'épaisseur de paroi libre et de septum, en ajustant un modèle paramétrique générique en fonction des données disponibles (par exemple des données d'imagerie par résonance magnétique (IRM)) ;
- construction du modèle AC 3D par balayage de courbe des "fibres" sur les surfaces paramétriques. Le modèle paramétrique générique contient deux informations principales :

- dimensions caractéristiques chez l'homme,
- "fibre" prédéfinie représentée par des courbes sur chaque couche, conformément aux données connues, la rotation moyenne de l'orientation des fibres est de 120° dans le sens inverse des aiguilles d'une montre, en allant de l'épicarde vers l'endocarde.

Selon l'invention, les axes centraux des fibres musculaires de His-Purkinje et musculaire sont construits préférentiellement par projection de sigmoïdes sur les surfaces paramétriques utilisées pour modéliser les ventricules. Par ailleurs, les axes centraux des fibres du tissu nodal atrial et du muscle atrial sont avantageusement construits par projection de sigmoïdes sur les surfaces paramétriques utilisées pour modéliser les oreillettes.

Les masses musculaires atriales et ventriculaires; les branches des faisceaux gauche et droit et les réseaux de Purkinje sont ensuite construits par balayage de courbe pour tous ces axes centraux.

*6.3.5 paramètres physiologiques du modèle*

Une fois les caractéristiques morphologiques et structurelles du modèle établies, il est nécessaire de définir les propriétés dynamiques de chaque cellule.

Chaque cellule appartient à l'une des régions de la masse musculaire atriale ou ventriculaire ou à l'une des régions couvrant le tissu nodal et les fibres de His-Purkinje. Les paramètres physiologiques comprennent :

- la dépolarisation ;
- la phase réfractaire absolue ;
- la phase réfractaire relative ;
- pour les cellules auto-rythmiques, les phases de diastole lente.

La propagation est anisotrope et, pour chaque cellule, l'anisotropie est fonction de l'orientation de l'axe du faisceau au point de l'axe le plus proche du centroïde de la cellule. La vitesse de propagation parallèlement (Vy) et perpendiculairement (Vx) à une fibre musculaire dépend des tenseurs de conductivité électrique intracellulaires et interstitiels.

De plus, chaque cellule possède des propriétés adaptatives incluant en particulier la variation de la phase réfractaire en fonction de la longueur du cycle et la conduction ralentie dans du tissu en période réfractaire relative (repos partiel).

Le paramétrage d'une cellule comprend par exemple les étapes suivantes :

- on définit interactivement ou par défaut (à partir d'une base de données) les paramètres p1, p2, ..., pn de valeurs v1, v2,..., vn d'une région R.
- à toute cellule appartenant à cette région sont assignées les valeurs v1, v2, .., vn.

*6.3.6 simulation du VCG et de l'ECG*

Des projections 3D isochrones et des ECG et VCG simulées basées sur différentes formulations de sources équivalentes peuvent ainsi être calculées au moyen du modèle de coeur obtenu.

*6.3.7 modélisalion et fil de fer 3D, rendu des surfaces et des volumes*

Un système de modélisation et de visualisation 3D permet d'obtenir des modèles AC 3D avec des tailles de grain différentes, et fournit des rendus en fil de fer, sur faces polygonales et/ou voxels des modèles. Une telle interface permet d'adapter les paramètres du modèle, afin de correspondre à des données expérimentales connues.

Il est également possible de visualiser, grâce à un algorithme de rendu des volumes, des données réelles, par exemple celles provenant de sources IRM, ce qui permet la fusion de données générées par le modèle et de données réelles correspondant à un patient.

Le système de modélisation/visualisation permet encore de comparer des modèles de granularité différente pour déterminer leur aptitude à reproduire des conditions telles que la conduction ralentie, des fronts d'ondes inhomogènes et des ré-entrées avec ces schémas complexes, ainsi que leurs effets corrélatifs sur l'ECG.

*6.3.7 génération d'un modèle 3D coeur/torse (avec la colonne vertébrale)*

Un modèle de torse en 3 dimensions est construit, par balayage de courbes sur un axe central représentant la colonne vertébrale. Ensuite, le modèle de coeur est inséré dans ce modèle de torse. La colonne vertébrale elle-même a été également construite par balayage de courbes sur le même axe central, mais avec des paramètres différents, afin d'obtenir une surface plus mince.

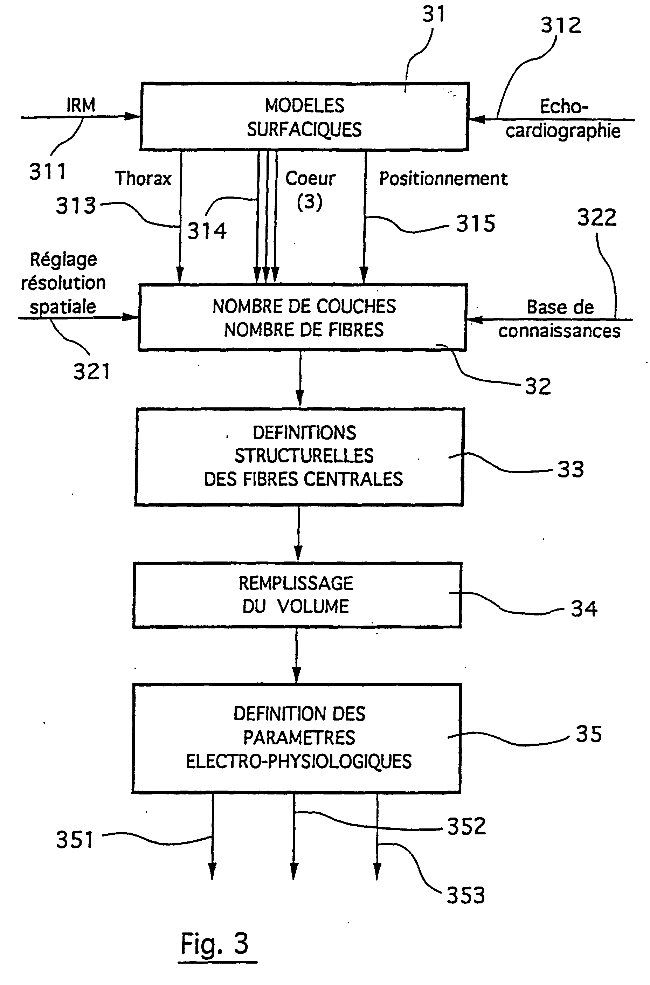

*6.3.8 description des étapes de modélisation (figure 3)*

On décrit maintenant plus en détail les différentes étapes mises en oeuvre pour obtenir le modèle de coeur discuté ci-dessus. La figure 3 présente, sous la forme d'un organigramme, les différentes étapes correspondantes.

La modélisation commence par une étape 31 d'obtention de modèles surfaciques. Les paramètres correspondants sont obtenus en particulier à partir de données :

- IRM311.
- échocardiographiques 312.

A partir de ces informations, deux modèles géographiques sont obtenus :

- un modèle géométrique du thorax 313 ;
- un modèle géométrique du coeur 314, ainsi que le positionnement 315 du modèle de coeur 314 dans le modèle de thorax 313.

On obtient à partir des données IRM 311 :

- un modèle surfacique B-spline ajusté aux données IRM du thorax. L'ajustement s'effectue par déplacement des points de contrôle associés à chaque "patch" dudit modèle ;
- l'orientation et la mesure du grand axe base-apex du coeur dans le thorax, qui sont déterminées par des coupes IRM dédiées à cette étude ;
- un modèle de surface B-Spline ajusté à la surface externe du coeur ;
- une estimation de la surface des cavités ventriculaires et une estimation du volume des cavités.

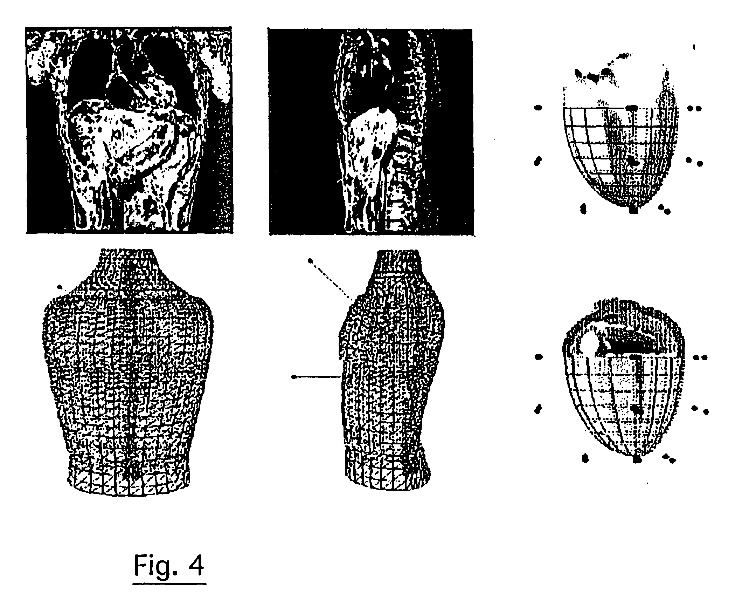

Cette estimation permet de déterminer deux surfaces B-Spline correspondant aux surfaces internes des ventricules. Cet aspect est illustré par la figure 4, qui est une copie d'écran présentant un exemple d'estimation.

On obtient par ailleurs à partir des données échographiques 312 :

- une estimation de l'épaisseur du septum interventriculaire en systole et diastole;
- une estimation de l'épaisseur des ventricules en systole et en diastole.

Ces données sont introduites dans le modèle surfacique du coeur pour affiner les caractéristiques géométriques.

Au total, quatre surfaces paramétriques sont donc obtenues :

- une surface 313 correspondant au thorax ;
- et trois autres surfaces 314 correspondant à la surface externe du coeur, et aux deux surfaces internes définissant les cavités.

On définit ensuite (32) le nombre de couches et le nombre de fibres. Le nombre de surfaces intermédiaires et de fibres dépend en particulier du choix de la résolution spatiale du modèle. Cette dernière est avantageusement définie interactivement (321).

Une fois la résolution spatiale (321) déterminée. le nombre de surfaces intermédiaires et le nombre de fibres par surface peuvent être déterminés à l'aide d'une base de connaissances (322). Les règles de cette base de connaissance font état de la dimension des surfaces cavitaires et externes du coeur, et du choix de la résolution spatiale. Le critère de satisfaction est déterminé par le remplissage ou non du volume.

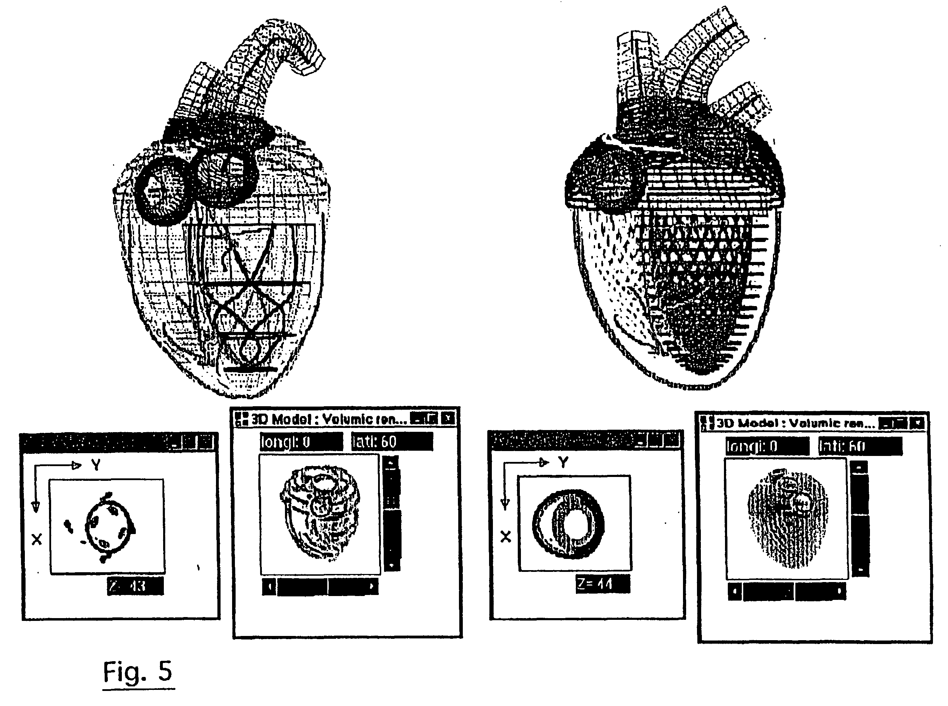

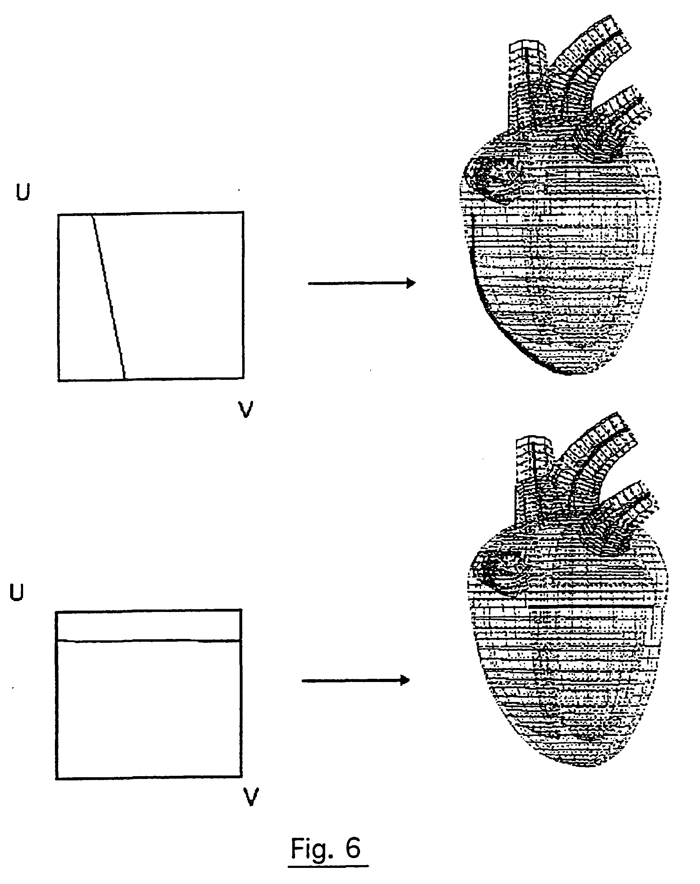

Cet aspect est illustré par la copie d'écran de la figure 5, qui est L'étape suivante (33) est la définition structurelle des fibres centrales. Ces dernières sont établies par projection de courbes définies dans un plan (u, v) sur les surfaces paramétriques, ainsi que cela est illustré par la copie d'écran présentée en figure 6.

Ainsi, l'utilisateur est affranchi du problème de construction point à point de courbe sur des surfaces qui peuvent être arbitrairement complexes.

Ensuite, selon l'invention on effectue le remplissage (34) du volume. Les faisceaux de fibres sont construits à partir du parcours d'une quadrique le long des fibres centrales.

Comme déjà expliqué, on associe un cadre de Frenet (T, N, B) à chaque point échantillonné de l'espace à l'intérieur de la quadrique. Ce point échantillonné donne naissance à une cellule, dont les propriétés structurelles sont données comme suit : l'orientation du faisceau de fibres auquel la cellule appartient est déterminée par le cadre de Frenet associé au centre de la quadrique qui se déplace sur l'axe de la fibre centrale. T est le vecteur tangent (orientation du faisceau de fibres), et les vecteurs N et B sont générateurs d'un plan orthogonal à T.

Les figures 2 (déjà commentée) et 7) illustrent ce principe.

Enfin, le procédé de l'invention comprend une étape (35) de définition des propriétés électro-physiologiques. Les propriétés électro-physiologiques de chaque cellule sont avantageusement définies interactivement, par exemple par l'intermédiaire d'une boîte de dialogue. Le volume cardiaque est partitionné en régions qui peuvent être à leur tour partitionnées en sous-régions.

A chaque cellule d'une région R donnée, on associe les paramètres suivants :

- vitesse de propagation d'une impulsion (351) : on associe à chaque cellule de la région R les valeurs $\alpha$, $\beta$ et $\gamma$ telles que:

$$\mathbf{V}_R = \begin{pmatrix} \alpha\mathbf{T} \\ \beta\mathbf{N} \\ \gamma\mathbf{B} \end{pmatrix}$$

où (T, N, B) constituent le cadre de Frenet associé à chaque cellule. La composante co-linéaire à T est la composante de la vitesse de propagation le long de la fibre. Les deux autres composantes déterminent la vitesse radiale par rapport à la fibre. Ainsi, les propriétés dynamiques sont étroitement liées aux propriétés structurelles ;

- les périodes réfractaires relatives et absolues ;

- pour le système de conduction électrique (tissu nodal), les fréquences de battement des cellules autorythmiques fixé par exemple à l'aide d'une boîte de dialogue.

Ces données physiologiques peuvent avoir deux origines :

- des ouvrages de référence et des articles scientifiques (par exemple Guiton 72, Braunwald 88, Harrison 92) ;
- un ajustement spécifique à chaque patient, par exemple à partir d'enregistrements électro-physiologiques endocavitaires que l'on obtient en exploration fonctionnelle, pour les cas indiqués sur le plan clinique.

*6.3.9 illustrations*

Afin d'illustrer le fonctionnement du procédé de l'invention, dans le cas de la modélisation d'un coeur, on décrit rapidement ci-après une série de figures correspondant aux différentes étapes discutées ci-dessus.

On notera que ces différents résultats ont été obtenus à l'aide d'un micro-ordinateur de type PC (marque déposée). L'utilisation de la technique de l'invention s'avère donc peu coûteuse, par rapport aux techniques connues.

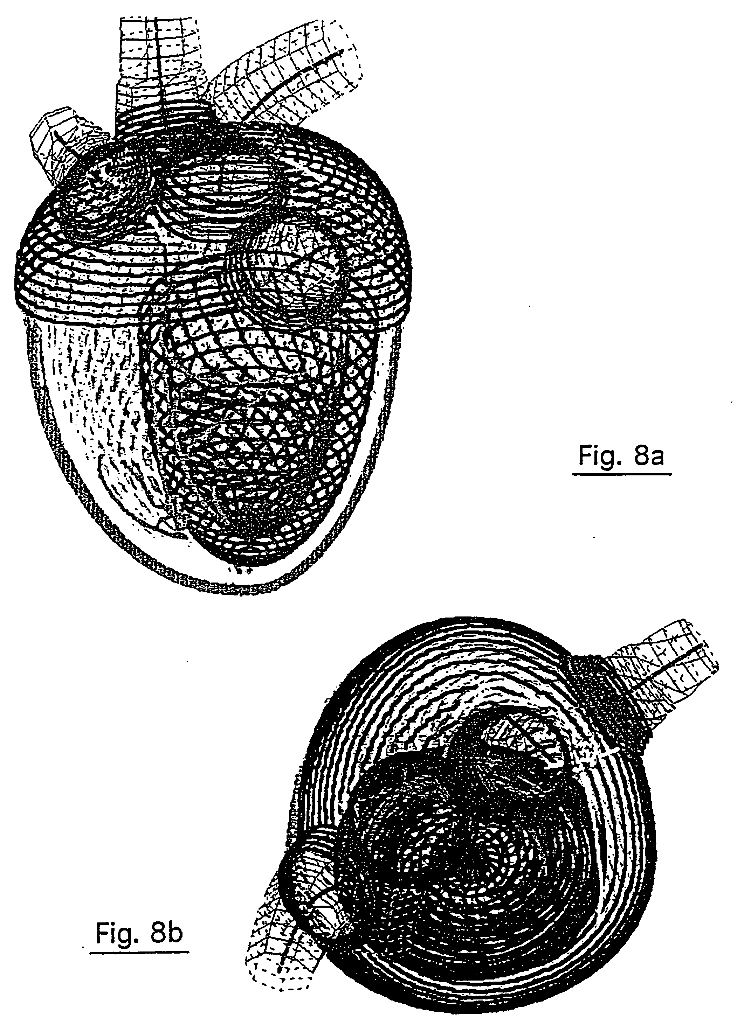

Les figures 8a et 8b présentent deux vues d'un modèle paramétrique du coeur, illustrant la génération de surfaces et de courbes paramétriques.

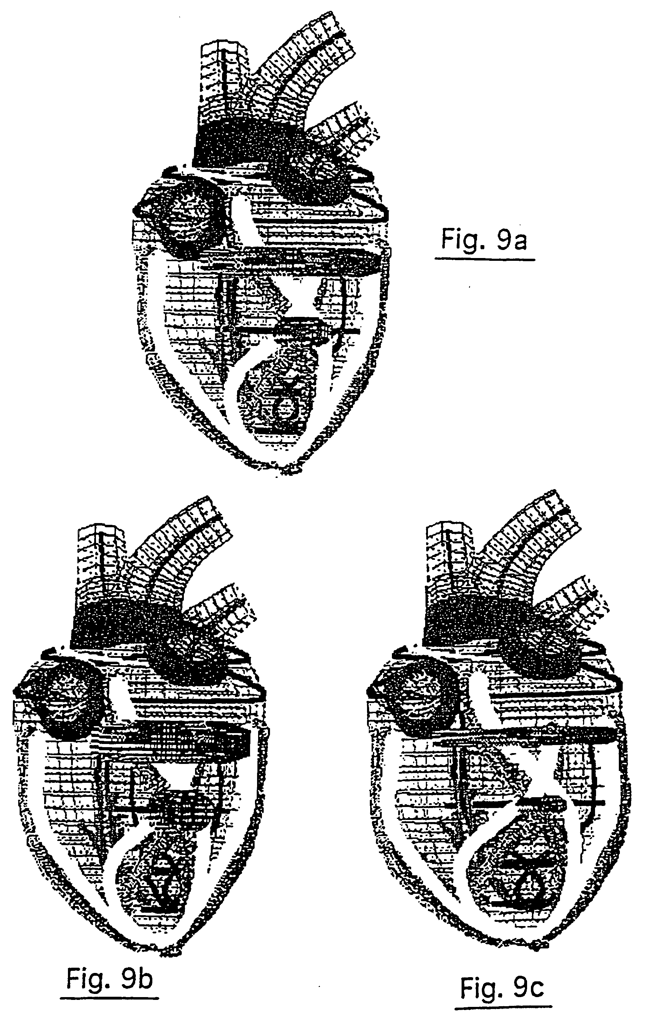

Les figures 9a, 9b et 9c illustrent trois modèles 3D représentant respectivement un coeur normal, un coeur avec une hypertrophie ventriculaire gauche et un coeur dilaté.

Pour modéliser le coeur hypertrophié, on augmente le rayon de la quadrique. Pour le coeur dilaté, on ajuste les paramètres correspondants des surfaces paramétriques.

Les bases des principales veines et artères (c'est-à-dire l'aorte, la veine cave supérieure, le tronc pulmonaire et la veine cave inférieure) ont également été modélisées, afin de simuler des blocs naturels susceptibles de jouer un rôle dans le flutter atrial et la fibrillation atriale.

L'automate cellulaire 3D du coeur comprend les oreillettes, les ventricules et le système de conduction spécialisée.

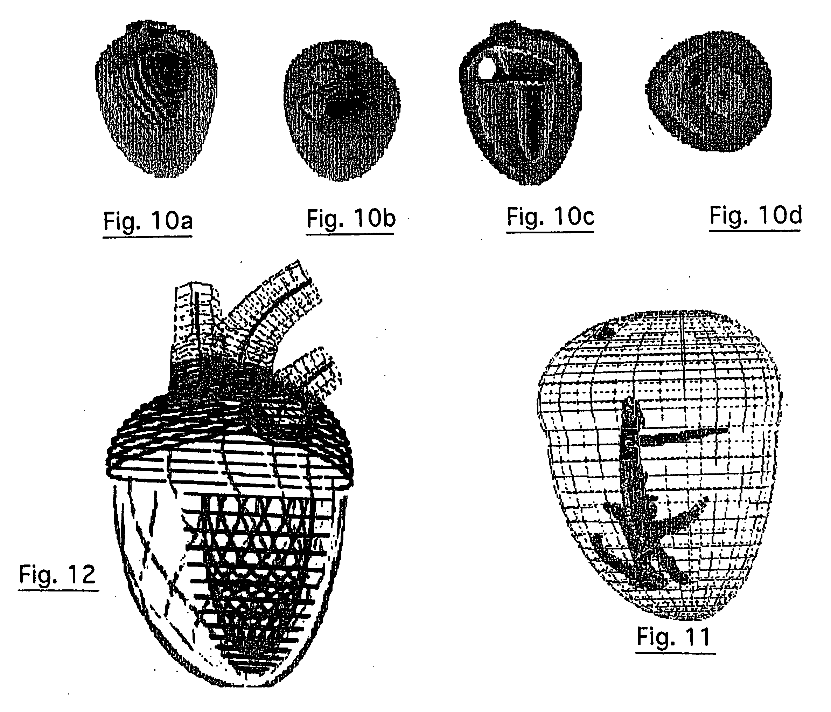

Les figures 10a à 10d illustrent le rendu en volume du modèle 3D. On peut notamment remarquer l'organisation sigmoïde des faisceaux de fibres musculaires ventriculaires (figure 10a) et des bases des vaisseaux principaux.

La figure 11 présente une représentation en fil de fer du système de conduction spécialisé, et la figure 12 une représentation en fil de fer montrant les bases des trois principaux vaisseaux (aorte, tronc pulmonaire et veine cave supérieure) ainsi que l'orientation des différentes fibres musculaires.

Le tissu musculaire est organisé en quatre couches, chacune d'entre elles étant caractérisée par une orientation particulière des fibres.

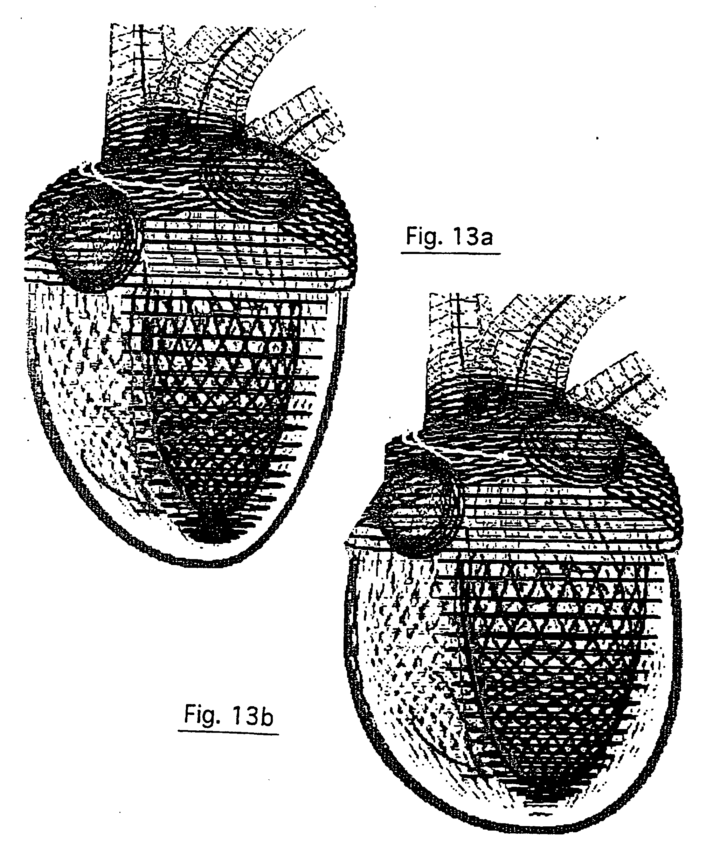

Les figures 13a et 13b permettent d'effectuer une comparaison entre un coeur normal et un coeur dilaté. Elles montrent les différences entre les surfaces paramétriques utilisées pour modéliser les ventricules normaux (figure 13a) et dilatés (figure 13b), après définition de nouveaux paramètres de génération des surfaces paramétriques.

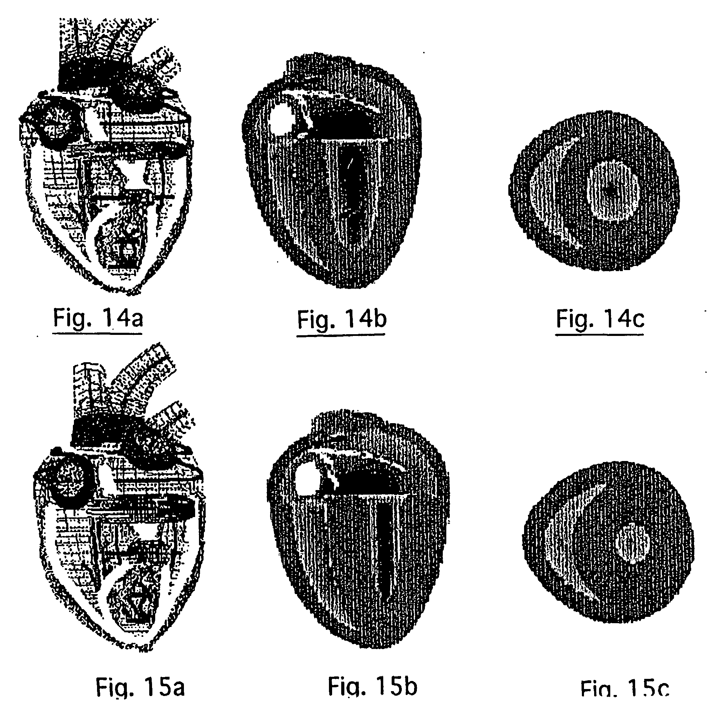

Les figures 14a à 14c d'une part et 15a à 15c d'autre part permettent quant à elles d'illustrer la comparaison entre un coeur normal et un coeur hypertrophié. Les figures 15a à 15c illustre la taille augmentée du rayon de la quadrique utilisée pour modéliser des ventricules hypertrophiés.

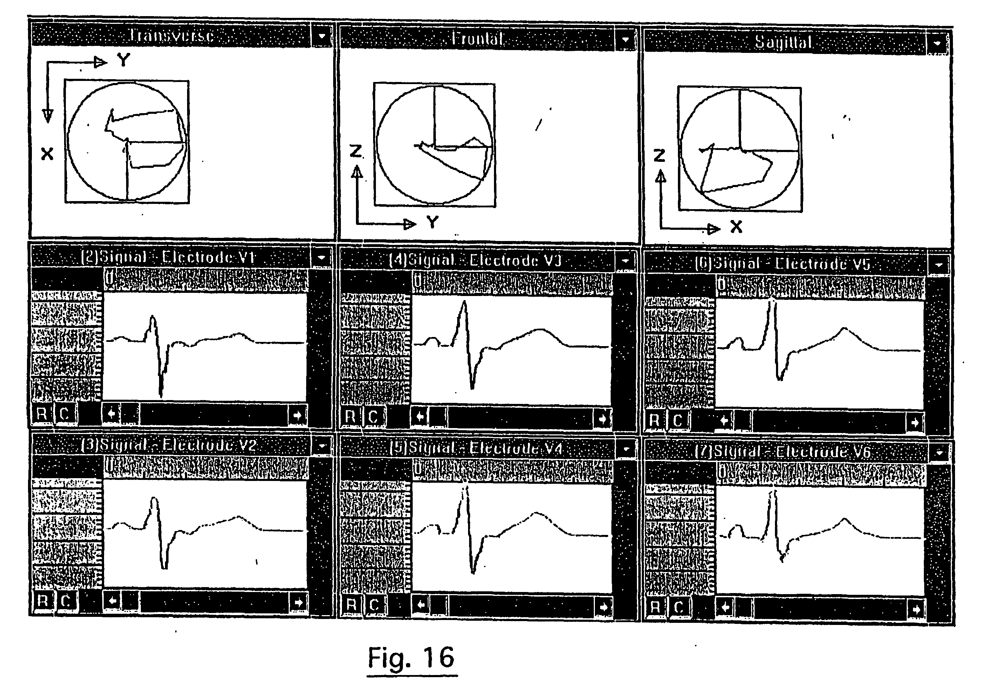

La figure 16 montre la simulation d'un électrocardiogramme (CG) simulé au niveau des dérivations précordiales et un vecto-cardiogramme (VCG) correspondant à une impulsion sinusale normalement conduite. On constate que le modèle 3D de l'invention permet donc d'analyser la morphologie QRS de l'ECG battement par battement.

La figure 4 déjà commentée montre des représentations fil de fer des modèles de coeur et de l'ensemble coeur/torse (y compris la colonne vertébrale) comparées aux données IRM. Les surfaces paramétriques permettent l'ajustement de tous les modèles à des données patient réelles.

6.4 généralisation

*6.4.1 Généralisation mécanique pour les tissus de type musculaire*

Avec le même procédé ou un procédé analogue, il est possible d'associer à chaque cellule musculaire des propriétés mécaniques passives et actives :

- élastance ;
- contractilité (vitesse de contraction et force développée par une fibre lors de sa contraction).

L'affectation de ces propriétés mécaniques concerne le coeur, les vaisseaux et les muscles lisses et squelettiques.

Par exemple, pour les vaisseaux coronaires, la surface cardiaque peut être représentée par une surface paramétrique sur laquelle un vaisseau donné peut être décrit par son axe central qui est astreint à cette surface. En balayant cette courbe simultanément par deux quadriques concentriques et de rayons différents, on peut construire une couche de la paroi du vaisseau en sélectionnant les cellules se situant entre les deux surfaces et sur le plan orthogonal au vecteur T du cadre de Frenet.

De cette manière, on peut construire les trois couches constitutives de la paroi d'un vaisseau (de l'intérieur vers l'extérieur) :

- l'intima (tunique interne) ;
- la paroi moyenne constituée de fibres musculaires lisses organisées selon deux directions parallèles et orthogonales à l'axe du vaisseau ;
- la tunique externe (gaine conjonctive).

*6.4.2 Généralisation pour un autre organe tel que le cerveau*

Très schématiquement, le cerveau est constitué de subtance grise et de substance blanche.

Pour chacune de ces substances, le procédé peut être le suivant :

- Substance blanche les associations cortico-corticales constituent la substance blanche ce sont des fibres parallèles à la surface et organisées en faisceaux. Elles peuvent être caractérisées de la façon suivante :

- vitesse de propagation ;
- dispersion des vitesses de propagation entre deux faisceaux distincts
    La substance blanche peut donc être constuite en balayant des courbes représentant l'axe des fibres associatives.
- Substance grise : elle recouvre la substance blanche, et elle est organisée en colonnes corticales perpendiculaires à la surface du cortex. Les cellules constitutives principales sont les cellules pyramidales.
- On peut donc concevoir une construction colonne par colonne avec notamment les propriétés macroscopiques suivantes :

- seuil d'excitabilité global associé à une colonne ;
- potentiel d'activitation (durée et amplitude) ;
- coefficient d'atténuation spatiale correspondant à des processus locaux d'inhibition et à la diminution des densités de points de contact synaptiques inter-colonnes en fonction de la distance entre les colonnes.

Un processus de construction de la substance grise peut être obtenu en balayant les axes centraux des colonnes corticales.

## REFERENCES

BEELER G.W, REUTER R., Reconstruction of the action potential of ventricular myocardial fibers, *J. Physiol.,* Vol 268, 177-210, 1977.

BRAUNWALD E., Heart Disease, A textbook of cardiovascular medicine, W.B. Saunders Company, Third Edition, 1988.

CUFFIN BN., COHEN D., Magnetic fields of a dipole in special volume conductor shapes, *IEEE Trans. Biomed* Eng., Vol. BME-24, n°4, 372-381, 1977.

DI FRANCESCO D., NOBLE D., A model of cardiac electrical activity incorporating ionic pumps and concentration changes, *Trans. R Soc. Lond (Biol)* 307,353.398,1985.

GESELOWITZ D.B, On the theory of the electrocardiogram. *Proc. IEEE* 77, 6,1989.

GUYTON AS., COLEMAN T.G., GRANGER H.J., Circulation : overall regulation, *Ann. Rev. Physiol.* 34, 13, 1972.

HARRISON T.R, Principes de médecine interne, 5ème édition, Médecine-Sciences, Flammarion, 1992.

HODGKIN A.L., HUXLEY AF., A quantitative description of membrane current and its application to conduction and excitation in nerve. *J. Physiol.,* 117, 1952.

LEON L.J., HORACEK B.M., Computer Model of excitation and recovery in the anisotropic myocardium I. Rectangular and cubic arrays of excitable *elements, J. Electrocardiol.,* vol. 24, 1-15, 1991.

MARKUS M., HESS B., Isotropic cellular Automaton for modeling excitable média, *Nature,* 347, 56-58, 1990.

TAKHOR N.V., EISENMAN LN., Three-Dimensional Computer Model of the Heart : Fibrillation induced by Extrastimulation, *Comput. Biomed Res.,* Vol 22, 532-545,1989.

VAN CAPELLE F.J.L., DURRER D., Computer simulation of arrhythmias in a network of coupled excitable elements. *Circ. Res.,* 47.454-466,1980.

WEI D., OKAZAXI O., HARUMI K., HARASAWA E., HOSAKA H., Comparative Simulation of Excitation and Body Surface Electrogram with Isotropie and Anisotropie Computer Heart Models, *IEEE Trans. Biomed.* Eng., BME-42, 343, 1995.

**Revendications**

1. Procédé de construction en trois dimensions d'un organe virtuel, représentatif d'un organe réel, **ca-**

**ractérisé en ce qu'**il comprend les étapes suivantes :

- obtention (111) d'un modèle surfacique dudit organe virtuel, comprenant au moins une surface paramétrique (S) représentant une couche tissulaire dudit organe virtuel ;
- affectation (112) à chacune desdits surfaces paramétriques d'au moins une courbe, représentant l'axe central d'une fibre de ladite couche tissulaire, ladite affectation étant effectuée en fonction de propriétés structurelles dudit organe ;
- création (113) du volume dudit organe virtuel, sous la forme d'éléments unitaires, ou cellules, construits successivement par balayage de chacun des points d'une courbe considérée par une quadrique dont les axes sont colinéaires aux vecteurs unités du cadre de Frenet associé à chacun desdits points ;
- affectation (114), à au moins certaines desdites cellules, d'au moins une propriété physique et/ou physiologique.

2. Procédé selon la revendication 1, **caractérisé en ce que** ladite étape d'affectation (114) d'au moins une propriété physique et/ou physiologique permet de déterminer un comportement dynamique intrinsèque desdites cellules et/ou la dynamique des interactions avec des automates cellulaires et/ou toute(s) équation(s) d'évaluation ainsi construits.

3. Procédé selon l'une quelconque des revendications 1 et 2, caractérisé en **caractérisé en ce que** ladite étape de création (113) du volume affecte à chacune desdites cellules un volume et une orientation.

4. Procédé selon l'une quelconque des revendications 1 à 3, **caractérisé en ce que** lesdites propriétés dynamiques appartiennent au groupe comprenant :

- des propriétés électriques ;
- des propriétés mécaniques ;
- des propriétés chimiques ;
- des propriétés adaptatives ;
- des propriétés évolutives.

5. Procédé selon l'une quelconque des revendications 1 à 4, **caractérisé en ce qu'**on affecte également à au moins certaines desdites cellules des règles de propagation de signaux vers au moins une autre cellule, comprenant au moins une vitesse de propagation d'une impulsion.

6. Procédé selon l'une quelconque des revendications 1 à 5, **caractérisé en ce que** ladite étape d'affectation (114) de courbes comprend les étapes suivantes :

- réalisation desdites courbes dans un plan (uv) ;
- application à partir dudit plan (uv) desdites courbes sur ladite surface (S).

7. Procédé selon l'une quelconque des revendications 1 à 6, **caractérisé en ce qu'**au moins certains des paramètres appartenant au groupe comprenant :

- la résolution spatiale ;
- le nombre de couches ;
- le nombre de fibres par couche ;
- le rayon de la quadrique ;
- les propriétés de propagation,

sont paramétrables.

8. Procédé selon la revendication 7, **caractérisé en ce qu'**il comprend une étape de contrôle (12) de l'adéquation entre la résolution spatiale dudit modèle et le nombre de couches et/ou le nombre de fibres par couche dudit modèle.

9. Procédé selon l'une quelconque des revendications 1 à 8, **caractérisé en ce qu'**il comprend une étape de mise en place (115) dudit organe virtuel dans un modèle d'une portion du corps recevant ledit organe virtuel.

10. Procédé selon la revendication 9, **caractérisé en ce que** ladite étape de mise en place (115) tient compte d'au moins un des aspects suivants :

- position dans le modèle de ladite portion du corps dudit organe virtuel ;
- inclinaison dudit organe virtuel par rapport au modèle de ladite portion du corps ;
- paramétrage du modèle de ladite portion du corps.

11. Procédé selon l'une quelconque des revendications 1 à 10, **caractérisé en ce que** ledit organe appartiennent au groupe comprenant :

- le coeur ;
- le cerveau ;
- les muscles, notamment les muscles lisses et les muscles squelettiques ;
- les vaisseaux.

12. Procédé selon l'une quelconque des revendications 1 à 15, **caractérisé en ce que** ledit organe virtuel représente un coeur, et **en ce qu'**il tient compte de deux types de tissus :

- le tissu musculaire ;
- le tissu constituant le réseau électrique du coeur.

**Patentansprüche**

1. Dreidimensionales Konstruktionsverfahren eines virtuellen, für ein reelles Organ repräsentatives Organ, **dadurch gekennzeichnet, dass** es die folgenden Schritte umfasst:

   - Erzeugen (111) eines Oberflächenmodells des virtuellen Organs, das mindestens eine parametrische Fläche (S) umfasst, welche eine Gewebeschicht des virtuellen Organs darstellt;

   - Zuordnung (112) von mindestens einer Kurve zu jeder dieser parametrischen Flächen, welche die Zentralachse einer Faser der Gewebeschicht darstellt, wobei die Zuordnung als Funktion der strukturellen Eigenschaften des Organs erfolgt;

   - Erzeugung (113) des Volumens des virtuellen Organs in Form von Einheitselementen oder Zellen, die nacheinander durch Abtasten eines jeden Punktes einer von einer Quadrik betrachteten Kurve, deren Achsen jeweils eine Linie mit den Einheitsvektoren des mit einem jeden dieser Punkte assoziierten Frenet-Rahmens bilden;

   - Zuordnung (114) von mindestens einigen der Zellen zu mindestens einer physikalischen und/ oder physiologischen Eigenschaft.

2. Verfahren nach Anspruch 1, **dadurch gekennzeichnet, dass** der Zuordnungsschritt (114) von mindestens einer physikalischen und/oder physiologischen Eigenschaft das Feststellen eines diesen Zellen eigenen dynamischen Verhaltens, und/oder der Dynamik der Wechselwirkungen mit den Zellenautomaten und/oder mit jeder (allen) so aufgestellten Bewertungsgleichung(en) ermöglicht.

3. Verfahren nach einem der Ansprüche 1 oder 2, **dadurch gekennzeichnet, dass** der Erzeugungsschritt (113) des Volumens einer jeden dieser Zellen ein Volumen und eine Orientierung zuordnet.

4. Verfahren nach einem der Ansprüche 1 bis 3, **dadurch gekennzeichnet, dass** die dynamischen Eigenschaften zu der Gruppe gehören, die folgendes umfasst:

   - elektrische Eigenschaften;

   - mechanische Eigenschaften;

   - chemische Eigenschaften;

   - adaptive Eigenschaften;

   - wandlungsfähige Eigenschaften.

5. Verfahren nach einem der Ansprüche 1 bis 4, **dadurch gekennzeichnet, dass** ebenfalls mindestens einigen der Zellen Regeln für die Übertragung von Signalen zu mindestens einer anderen Zelle zugeordnet werden, wobei diese Regeln mindestens eine Fortpflanzungsgeschwindigkeit eines Impulses umfassen.

6. Verfahren nach einem der Ansprüche 1 bis 5, **dadurch gekennzeichnet, dass** der Zuordnungsschritt (114) von Kurven die folgenden Schritte umfasst:

   - Realisierung dieser Kurven in einer Ebene (uv);

   - Anwendung der Kurven auf die Fläche (S), ausgehend von der Ebene (uv).

7. Verfahren nach einem der Ansprüche 1 bis 6, **dadurch gekennzeichnet, dass** mindestens einige der Parameter aus der folgenden Gruppe:

   - die Raumauflösung;

   - die Zahl der Schichten;

   - die Zahl der Fasern je Schicht;

   - der Radius der Quadrik;

   - die Fortpflanzungseigenschaften,

   parametrisierbar sind.

8. Verfahren nach Anspruch 7, **dadurch gekennzeichnet, dass** es einen Kontrollschritt (12) der Eignung zwischen der Raumauflösung des Modells und der Zahl der Schichten und/oder der Zahl der Fasern je Schicht in diesem Modell aufweist.

9. Verfahren nach einem der Ansprüche 1 bis 8, **dadurch gekennzeichnet, dass** es einen Schritt zum Einbringen (115) des virtuellen Organs in einem Modell eines das virtuelle Organ aufnehmenden Teils des Körpers umfasst.

10. Verfahren nach Anspruch 9, **dadurch gekennzeichnet, dass** der Schritt zum Einbringen (115) mindestens einen der folgenden Aspekte berücksichtigt:

    - Position des virtuellen Organs in dem Körperteilmodell;

    - Neigung des virtuellen Organs im Verhältnis zum Körperteilmodell;

- Parametrierung des besagten Körperteilmodells.

**11.** Verfahren nach einem der Ansprüche 1 bis 10, **dadurch gekennzeichnet, dass** das Organ der Gruppe angehört, die folgendes umfasst:

- das Herz;

- das Gehirn;

- die Muskeln, insbesondere die glatten Muskeln und die Skelettmuskeln;

- die Gefäße.

**12.** Verfahren nach einem der Ansprüche 1 bis 11, **dadurch gekennzeichnet, dass** das virtuelle Organ ein Herz darstellt, wobei die beiden folgenden Sorten von Geweben berücksichtigt werden:

- Muskelgewebe;

- das das elektrische System des Herzens bildende Gewebe.

**Claims**

**1.** Method for constructing a virtual organ in three dimensions, representing a real organ, **characterised in that** it comprises the following steps:

- obtaining (111) a surface model of the said virtual organ, comprising at least one parametric surface (S) representing a tissue layer of the said virtual organ;
- assigning (112) each of the said surface parameters at least one curve, representing the central axis of a fibre of the said tissue layer, the said assigning being carried out as a function of the structural properties of the said organ;
- creating (113) the volume of the said virtual organ in the form of unitary elements, or cells, constructed successively by sweeping each of the points of a curve in question with a quadratic whose axes are collinear with the unit vectors of the Frenet frame associated with each of the said points;
- assigning (114) at least one physical and/or physiological property to at least some of the said cells.

**2.** Method according to Claim 1, **characterised in that** the said step (114) of assigning at least one physical and/or physiological property makes it possible to determine an intrinsic dynamic behaviour of the said cells and/or the dynamic of the interactions with cellular automata and/or any evaluation equation(s) constructed in this way.

**3.** Method according to either one of Claims 1 and 2, **characterised in that** the said step (113) of creating the volume assigns a volume and an orientation to each of the said cells.

**4.** Method according to any one of Claims 1 to 3, **characterised in that** the said dynamic properties belong to the group comprising:

- electrical properties;
- mechanical properties;
- chemical properties;
- adaptive properties;
- evolutive properties.

**5.** Method according to any one of Claims 1 to 4, **characterised in that** at least some of the said cells are also assigned rules of signal propagation to at least one other cell, comprising at least one propagation speed of an impulse.

**6.** Method according to any one of Claims 1 to 5, **characterised in that** the said step (114) of assigning curves comprises the following steps:

- producing the said curves in a plane (uv);
- applying the said curves to the said surface (S) from the said plane (uv).

**7.** Method according to any one of Claims 1 to 6, **characterised in that** at least some of the parameters belonging to the group comprising:

- the spatial resolution;
- the number of layers;
- the number of fibres per layer;
- the radius of the quadratic;
- the propagation properties,

are parameterisable.

**8.** Method according to Claim 7, **characterised in that** it comprises a step of checking (12) the compatibility between the spatial resolution of the said model and the number of layers and/or the number of fibres per layer of the said model.

**9.** Method according to any one of Claims 1 to 8, **characterised in that** it comprises a step (115) of placing the said virtual organ in a model of a portion of the body accommodating the said virtual organ.

**10.** Method according to Claim 9, **characterised in that** the said placement step (115) takes at least one of the following aspects into account:

- position of the said virtual organ in the model of the said position of the body;
- inclination of the said virtual organ with respect to the model of the said portion of the body;
- parameterisation of the model of the said portion of the body.

11. Method according to any one of Claims 1 to 10, **characterised in that** the said organ belongs to the group comprising:

   - the heart;
   - the brain;
   - the muscles, in particular the smooth muscles and the skeletal muscles;
   - the vessels.

12. Method according to any one of Claims 1 to 11, **characterised in that** the said virtual organ represents a heart, and **in that** it takes two types of tissue into account:

   - muscular tissue;
   - the tissue constituting the electrical network of the heart.

MODELE
SURFACIQUE

— 111

Réglages

131

AXES CENTRAUX
DE FIBRES

— 112

Paramètres

132

VOLUME

CONTROLE

— 113

Mesures

133

PROPRIETES
DES CELLULES

12

— 114

MISE EN PLACE

— 11

115

CREATION
DU MODELE

Paramètres/
mesures

PREDICTION ET/OU
EXPLICATION

BASE DE
DONNEES

15

14

16

## Fig. 1

Fig. 2

Fig. 7

IRM → MODELES SURFACIQUES ← Echo-cardiographie

31

312

311

Thorax

313

314

Coeur (3)

Positionnement

315

322

Réglage résolution spatiale → NOMBRE DE COUCHES NOMBRE DE FIBRES ← Base de connaissances

321

32

DEFINITIONS STRUCTURELLES DES FIBRES CENTRALES — 33

REMPLISSAGE DU VOLUME — 34

DEFINITION DES PARAMETRES ELECTRO-PHYSIOLOGIQUES — 35

351

352

353

Fig. 3

Fig. 4

Fig. 5

U

V

U

V

Fig. 6

Fig. 8a

Fig. 8b

Fig. 9a

Fig. 9b

Fig. 9c

Fig. 10a

Fig. 10b

Fig. 10c

Fig. 10d

Fig. 11

Fig. 12

Fig. 13a

Fig. 13b

Fig. 14a

Fig. 14b

Fig. 14c

Fig. 15a

Fig. 15b

Fig. 15c

EP 1 188 149 B1

Fig. 16